# EUROPEAN PATENT APPLICATION

(11) **EP 2 037 608 A1**
(43) Date of publication of application: **18.03.2009**
(21) Application number: 07744489.1
(22) Date of filing: 31.05.2007
(51) Int. Cl.: H04J 11/00

(54) **COMMUNICATION DEVICE AND RADIO COMMUNICATION SYSTEM**

(30) Priority: 05.06.2006 JP 2006155614
(71) Applicant: Sharp Kabushiki Kaisha, Osaka-shi, Osaka 545-8522 (JP)
(72) Inventor: TO, Shimpei, Antibes 06160 (FR); HAMAGUCHI, Yasuhiro, Chiba 290-0056 (JP); NAMBA, Hideo, Chiba 266-0005 (JP)
(74) Representative: Müller - Hoffmann & Partner
(86) International application number: PCT/JP2007/061101
(87) International publication number: WO 2007/142119

(57) **Abstract**

A communication apparatus multiplexing a first pilot signal in a transmission unit and multiplexing a second pilot signal according to a reception quality is provided. The communication apparatus receives from a communication source apparatus a transmission unit including a plurality of symbols and being multiplexed with a first pilot signal, and is **characterized by** including a pilot control information generation section 32 generating pilot signal control information requesting to allocate the second pilot signal to a symbol different from a symbol allocated with the first pilot signal, when a difference obtained by subtracting a reception quality of the pilot signal from a reception quality of the symbol different from the symbol allocated with the first pilot signal is a difference threshold value or more.

## Description

### Technical Field

The present invention relates to a communication system which multiplexes pilot signals in a transmission unit to perform channel compensation.

### Background Art

A necessity for a mobile communication system having higher spectrum efficiency is increasing with the increase in the amount of data communication in recent years, and various technologies aiming at those realizations have been proposed. One of the technologies with the possibility of enhancing spectrum efficiency is OFDMA (Orthogonal Frequency Division Multiple Access). With 3GPP (The 3rd Generation Partnership Project) as a core agency, the OFDMA has been decided to be adopted for a downlink access method of E-UTRA (Evolved Universal Terrestrial Radio Access) system of which standardization is promoted. (Non-patent document 1)

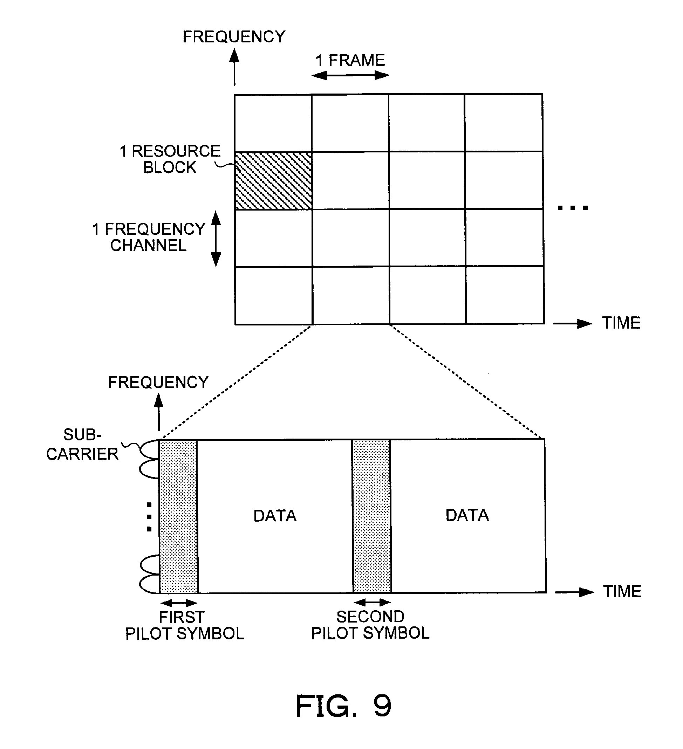

FIG. 9 shows an example of a division of the frequency-time resource in the downlink of this E-UTRA. Upper and lower diagrams of FIG. 9 show a division example of the resource of the whole system and a symbol configuration of one resource block, respectively. In an E-UTRA downlink, one block (hatched portion) obtained by dividing a frequency and time frame as shown in the upper diagram of FIG. 9 is set as a resource block, and one resource block is defined as a minimum unit to which a user accesses. One resource block comprises a pilot symbol and a data symbol (here, control information will also be included), as shown in the lower diagram of FIG. 9. Here, as shown in the lower diagram of FIG. 9, two pilot symbols, a first pilot symbol and a second pilot symbol, are provided in one resource block. Among these, the first pilot symbol is a known signal used for cell searching, quality measurement of a frequency channel and calculation of a channel estimation value, and is always inserted in the resource block.

Sub-carriers in this first pilot symbol is multiplied by a code which is unique to a base station, and this code has a role of identifying the base station and randomizing an interference. The second pilot symbol is, basically, used for calculation of the channel estimation value at the time of transmission by the directional beam formed or MIMO (Multi-Input Multi-Output) transmission. Also, in the case of transmissions other than the above, since a variation rate of fading cannot be followed only by the channel estimation using the first pilot symbol when a user moves fast, by using together the channel estimation by means of the second pilot symbol, degradation of a channel estimation accuracy can be suppressed. However, the second pilot symbol is not always inserted and the channel estimation in the usual single antenna transmission (no beam forming) is performed using the first pilot symbol.

Patent document 1 has been disclosed as a proposal which aims at enhancement in demodulation accuracy using such two pilot symbols. In patent document 1, shown is a method which compares a reception level of the first pilot symbol where transmission power is controlled and a reception level of the second pilot symbol where the transmission power is not controlled, and which selects the channel estimation value obtained from the pilot symbol with higher reception level and performs demodulation only using the selected channel estimation value. By using this method, it becomes possible to perform channel compensation using the pilot symbol from which the high channel estimation accuracy is acquired and to perform demodulation with high accuracy. The method of selecting one of the channel estimation values obtained from two pilot symbols corresponding to the variation rate of fading, and performing demodulation only using the selected channel estimation value is also described in patent document 1.
[Patent document 1]
   Japanese Patent Application Laid-Open No. 2002-44172
[Non-patent document 1]
   3GPP, TR 25.814 v0.3.1, "Physical Layer Aspects for Evolved UTRA"

However, since E-UTRA system is a system which uses the same frequency band in all cells, a quality (reception SINR: Signal to Interference plus Noise power Ratio) of a received signal deteriorates under an effect of interference coming from adjacent cells. Particularly, the first pilot symbol, since transmitted approximately at the same timing in all cells, is always interfered by the adjacent cells. As stated previously, each sub-carrier in the first pilot symbol is multiplied by a code unique to the base station, and it is designed so that the code may randomize the interference comeing from other cells to some extent. However, it is impossible to remove the interference completely. Accordingly, an estimated error due to the interference is included in the channel estimation value calculated from the first pilot symbol, and when performing channel compensation of the data symbol and demodulation thereof using this channel estimation value, there is a problem that the demodulation accuracy deteriorates as compared with the case of no interference from the adjacent cells.

Although patent document 1 is to perform channel compensation using the channel estimation value obtained from another pilot symbol which always transmits, when a reception level by one pilot symbol is low. However, which pilot symbol is to be selected is mainly determined according to a distance attenuation of the signal, and the interference coming from the adjacent cells under multi-cell environment is not taken into consideration at all. That is, when the distance between the base station and the terminal is short, the pilot symbol where transmission power is not controlled is selected, and when the distance between the base station and the terminal is long, the pilot symbol where transmission power is controlled is selected.

Since the error due to interference is included also in the calculated reception level under the presence of the interference, the estimation accuracy acquired from the pilot symbol with a higher reception level is not always high and even if the method by means of patent document 1 is applied to E-UTRA system, the demodulation accuracy may not be improved, or may be deteriorated.

Although it is assumed in patent document 1 to transmit always two pilot symbols, it is not efficient to always transmit two pilot symbols, and in the E-UTRA system, since a condition can be considered where the second pilot symbol is transmitted as needed, it is impossible to always apply the method shown in patent document 1.

Also as for follow-up to fading variation, although it is disclosed in patent document 1 to select the pilot symbol used corresponding to fading variation rate (it selects the pilot symbol where a transmission power is not controlled in the case of a high speed and the pilot symbol where the transmission power is controlled in the case of a low speed), in E-UTRA system, as shown in FIG. 9, since the first pilot symbol and the second pilot symbol are time-multiplexed with the data symbol, it is impossible to follow the variations even if selecting any one of the pilot symbols at the high variation rate. Accordingly, when the method shown in patent document 1 is applied to E-UTRA system under the high rate fading environment, the channel estimation accuracy has been deteriorated remarkably.

The present invention is made in view of such a situation, and an obj ect thereof is to provide a communication apparatus and a wireless communication system which multiplex a first pilot signal in a transmission unit and multiplex a second pilot signal according to a reception quality.

### Disclosure of the Invention

(1) In order to attain the above-mentioned object, the present invention has taken measures as the following. That is, a communication apparatus according to the present invention is the one receiving from a communication source apparatus a transmission unit including a plurality of symbols and being multiplexed with a first pilot signal, the communication apparatus generating pilot signal control information requesting the communication source apparatus to allocate a second pilot signal to a symbol different from a symbol allocated with the first pilot signal, and notifying the communication source apparatus of the generated pilot signal control information, when a difference obtained by subtracting a reception quality of the first pilot signal from that of a symbol different from the symbol allocated with the first pilot signal is a difference threshold value or more.

Thus, according to the communication apparatus of the present invention, it is possible to request to multiplex the second pilot signal in the symbol different from that of the first pilot signal. Specifically, when the difference is a difference threshold value or more, i.e., when the terminal using the same resource does not exist in the adjacent cell, it is possible to request to transmit the second pilot symbol. Thus, since the transmission of the second pilot symbol is requested by detecting existence of the terminal using the same resource in the adjacent cell based on the difference of the reception quality of the pilot symbol allocated to the different symbol, it becomes possible to perform highly accurate channel estimation using the second pilot signal. Further, by allocating the second pilot signal according to the reception quality, transmission of an unnecessary pilot symbol can be avoided and lowering of the throughput can be prevented.

(2) In the communication apparatus according to the present invention, the communication apparatus is characterized in that when the difference is less than the difference threshold value, the communication apparatus generates pilot signal control information requesting to suspend allocation of the second pilot signal.

Thus, when the difference is less than the difference threshold value, i.e., when the terminal using the same resource does not exist in the adjacent cell, enhancement in transmission efficiency can be achieved by suspending the allocation of the second pilot signal or not requesting it.

(3) Further, in the communication apparatus according to the present invention, the communication apparatus is characterized in that when the reception quality of the first pilot signal becomes a quality threshold value or more, the communication apparatus generates pilot signal control information requesting to suspend allocation of the second pilot signal.

Thus, since the allocation of the second pilot signal is suspended when the reception quality of the first pilot signal is good, the enhancement in transmission efficiency can be achieved.

(4) A communication apparatus according to the present invention is the one receiving from a communication source apparatus a transmission unit including a plurality of symbols and being multiplexed with a first pilot signal, the communication apparatus comprising: a measuring section for measuring a reception quality of the first pilot signal and a reception quality of a symbol different from a symbol allocated with the first pilot signal, a comparison section for comparing the two reception qualities measured by the measuring section to calculate the difference; and a pilot control information generation section for generating pilot signal control information requesting the communication source apparatus to allocate a second pilot signal to the symbol different from the symbol allocated with the first pilot signal when the difference calculated by the comparison section is a difference threshold value or more.

Thus, according to the communication apparatus of the present invention, it is possible to request to multiplex the second pilot signal in the symbol different from that of the first pilot signal. Specifically, when the difference is a difference threshold value or more, i.e., when the terminal using the same resource does not exist in the adjacent cell, the transmission of the second pilot symbol can be requested. The measuring section, in addition to the first pilot signal, measures the reception quality of the signal (the second pilot signal or the data signal when the second pilot signal is not allocated) allocated to the symbol different from the symbol allocated with the first pilot signal. Thus, since existence of the terminal using the same resource in the adjacent cell is detected and the transmission of the second pilot symbol is requested based on the difference of the reception qualities of the pilot symbols allocated to the different symbols, it becomes possible to perform highly accurate channel estimation using the second pilot signal. Further, by allocating the second pilot signal according to the reception quality, transmission of an unnecessary pilot symbol can be avoided and lowering of throughput can be prevented.

(5) The communication apparatus according to the present invention further comprises: an estimated value selection section for selecting a channel estimation value obtained from the second pilot signal when the second pilot signal is multiplexed in the transmission unit and the difference is a difference threshold value or more; and a channel compensation section for performing channel compensation using the selected channel estimation value.

Thus, when the second pilot signal is multiplexed in the transmission unit and the difference is the difference threshold value or more, since the channel estimation value obtained from the second pilot signal is selected and the channel compensation is performed using the selected channel estimation value, compared with the case where the channel compensation is performed using the channel estimation value obtained from the first pilot symbol, it becomes possible to perform channel compensation of the data symbol with high accuracy.

(6) The communication apparatus according to the present invention is characterized in that when the difference calculated by the comparison section is less than the difference threshold value, the estimated value selection section selects a channel estimation value calculated using a channel estimation value obtained from the first pilot signal or a channel estimation value obtained from the first pilot signal and the second pilot signal.

Thus, when the difference is less than the difference threshold value, since the channel estimation value obtained from the first pilot signal or the channel estimation value calculated using channel estimation value obtained from the first pilot signal and second pilot signal are selected, it becomes possible to suppress degradation of channel estimation accuracy when there is an interference from the adjacent cells.

(7) The communication apparatus according to the present invention is characterized in that when a movement speed is a speed threshold value or more, the pilot control information generation section generates the pilot signal control information requesting to allocate the second pilot signal.

Thus, when the movement speed of the terminal is fast, allocation of the second pilot signal is requested, and the degradation of the channel estimation accuracy can be suppressed by interpolating and calculating the channel estimation value of the data symbol from the channel estimation value obtained from the first pilot signal and the channel estimation value obtained from the second pilot signal.

(8) The communication apparatus according to the present invention further comprises an interpolation and extrapolation section for interpolating between a channel estimation value obtained from the first pilot signal and the channel estimation value obtained from the second pilot signal when the movement speed is a speed threshold value or more, wherein the channel compensation section performs channel compensation using the channel estimation value interpolated by the interpolation and extrapolation section.

Thus, when the movement speed of the terminal is fast, the second pilot signal is allocated, and the degradation of the channel estimation accuracy can be suppressed by interpolating and calculating the channel estimation value of the data symbol from channel estimation value obtained from the first pilot signal and channel estimation value obtained from the second pilot signal, by the interpolation and extrapolation section.

(9) A communication apparatus according to the present invention is the one transmitting to a communication destination apparatus a transmission unit including a plurality of symbols and being multiplexed with a first pilot signal, the communication apparatus comprising: a comparison section for taking in a reception quality of the first pilot signal received from the communication destination apparatus and a reception quality of a symbol different from a symbol allocated with the first pilot signal, and comparing the two taken-in reception qualities to calculate the difference; a pilot control information generation section for generating pilot signal control information instructing to allocate a second pilot signal to a symbol different from the symbol allocated with the first pilot signal based on the difference calculated by the comparison section; and a control section for controlling multiplexing the second pilot signal in addition to the first pilot signal based on the generated pilot signal control information.

Thus, in the communication apparatus (a communication controller, a base station, etc.) which controls communication, by receiving the reception quality from the communication destination apparatus (terminal), it can be determined whether the allocation of the second pilot signal is needed, and the allocation of the second pilot signal can be controlled based on the determination result. Thereby, in the terminal apparatus as the communication destination, the channel estimation according to the existence of interference can be performed.

(10) A communication apparatus according to the present invention is the one transmitting to a communication destination apparatus a transmission unit including a plurality of symbols and being multiplexed with a first pilot signal, the communication apparatus comprising: a radio section for receiving pilot signal control information requesting to allocate a second pilot signal to a symbol different from a symbol allocated with the first pilot signal from the communication destination apparatus when a difference obtained by subtracting a reception quality of the first pilot signal from that of a symbol different from the pilot symbol allocated with the first pilot signal is a difference threshold value or more; and a control section for controlling multiplexing the second pilot signal in addition to the first pilot signal based on the received pilot signal control information.

Thus, in the communication apparatus (a communication controller, a base station, etc.) which controls communication, by receiving the reception quality from the communication destination apparatus (terminal), it is determined whether the allocation of the second pilot signal is needed, and the allocation of the second pilot signal can be controlled based on the determination result. Thereby, in the terminal apparatus as the communication destination, the channel estimation according to the existence of interference can be performed.

(11) The communication apparatus according to the present invention is characterized in that when a resource transmitting data addressed to the communication destination apparatus differs from a resource at preceding data transmission, the control section does not multiplex the second pilot signal.

Thus, in the communication apparatus (a communication controller, a base station, etc.) which controls communication, by receiving the pilot signal control information, the request of the allocation of the second pilot signal from the communication destination apparatus (terminal) can be grasped, and the allocation of the second pilot signal can be controlled. Thereby, in the terminal apparatus as the communication destination, the channel estimation according to the existence of interference can be performed.

(12) The communication apparatus according to the present invention is characterized in that the first pilot signal is a common pilot signal simultaneously transmitted in a plurality of cells, and the second pilot signal is allocated to a symbol different in terms of time from the first pilot signal.

Thus, since the first pilot signal is the common pilot signal, the interference from the adjacent cells is inevitably given. While the second pilot signal, since it is allocated to the data symbol, is not likely to receive the interference from the adjacent cells, when the terminal in the adjacent cell does not use the same resource. By allocating the second pilot signal using such characteristics and performing channel estimation using the second pilot signal, the enhancement in the channel estimation accuracy can be achieved.

(13) A communication apparatus according to the present invention is the one receiving from a communication source apparatus a transmission unit including a plurality of symbols and being multiplexed with a first pilot signal and a second pilot signal allocated to a symbol different from a symbol of the first pilot signal, the communication apparatus comprising: a measuring section for measuring reception qualities of first pilot signal and second pilot signal; a comparison section for calculating a difference obtained by subtracting the reception quality of the first pilot signal from the reception quality of the second pilot signal; an estimated value selection section for selecting a channel estimation value obtained from the second pilot signal when the difference is a difference threshold value or more; and a channel compensation section for performing channel compensation using the selected channel estimation value.

Thus, when the difference is the difference threshold value or more, since the channel estimation value obtained from the second pilot signal is selected and the channel compensation is performed using the selected channel estimation value, compared with the case where the channel compensation is performed using the channel estimation value obtained from the first pilot symbol, it becomes possible to perform channel compensation of the data symbol with high accuracy.

(14) The communication apparatus according to the present invention is characterized in that when the difference calculated by the comparison section is less than the difference threshold value, the estimated value selection section selects the channel estimation value calculated using a channel estimation value obtained from the first pilot signal or a channel estimation value obtained from the first pilot signal and the second pilot signal.

Thus, when the difference is less than the difference threshold value, since selected is the channel estimation value obtained from the first pilot signal or the channel estimation value calculated using the channel estimation values obtained from the first pilot signal and second pilot signal, it becomes possible to suppress degradation of the channel estimation accuracy when there is the interference from the adjacent cells.

(15) A wireless communication system is the one communicating between a communication controller and a terminal apparatus using a transmission unit including a plurality of symbols and being multiplexed with a first pilot signal, the wireless communication system multiplexing a second pilot signal in a symbol different from a symbol allocated with the first pilot signal when a difference obtained by subtracting a reception quality of the first pilot signal from that of the symbol different from the symbol allocated with the first pilot signal is a difference threshold value or more.

Thus, according to the wireless communication system, the multiplexing of the second pilot signal in the symbol different from that of the first pilot signal according to the existence of the interference signal can be performed. Thereby, when the channel estimation using the second pilot signal with little effect of the interference in the communication apparatus of the receiving side, the channel estimation accuracy in the communication apparatus of the receiving side can be enhanced. Further, by allocating the second pilot signal according to the reception quality, the transmission of an unnecessary pilot symbol can be avoided and lowering of the throughput can be prevented.

According to the present invention, a first pilot signal is multiplexed in a transmission unit and a second pilot signal can be multiplexed according to a reception quality. Thereby, in a communication apparatus of a receiving side, channel estimation according to the existence of interference can be performed, and when there is little interference coming upon receiving the second pilot signal, it is possible to perform highly accurate channel estimation by performing channel estimation using the second pilot signal.

### Brief Description of the Drawings

FIG.1 shows a state of an interference wave coming from an adjacent cell in an E-UTRA system;
FIG.2 shows an example of an effect which the interference wave has on a reception quality;
FIG.3 is a block diagram showing a configuration example of a terminal apparatus according to a first embodiment;
FIG.4 is a block diagram showing a configuration example of a base station apparatus according to the first embodiment;
FIG.5 is a flowchart showing an example of an operation generating pilot signal control information in a terminal side;
FIG. 6 is a flowchart showing an example of an operation multiplexing a second pilot signal in a base station side;
FIG.7 is a flowchart showing an example of an operation of the base station side according to a second embodiment;
FIG.8 is a flowchart showing an example of an operation of a terminal side according to a third embodiment; and
FIG.9 shows a division example of frequency and time and resources, in a downlink of E-UTRA.

### Description of Symbols

- 10, 50:: Antenna section
- 11, 51:: Radio section
- 12, 52,: 65: Switch
- 13, 53:: A/D converter (A/D)
- 14, 54:: Synchronization section
- 15, 55:: GI removal section
- 16, 35, 56, 63:: S/P converter (S/P)
- 17, 57:: FFT section
- 18:: Channel selection section
- 19:: Symbol separation section
- 20:: Copy section
- 21:: Channel compensation section
- 22:: De-mapping section
- 23:: P/S converter (P/S)
- 24, 59:: Decoding section
- 25:: CQI measuring section (measuring section)
- 26:: Buffer
- 27:: CQI comparison section (comparison section)
- 28:: Channel estimation section
- 29:: Interpolation and extrapolation section
- 30:: Estimated value selection section
- 31:: CQI information generation section
- 32:: Pilot control information generation section
- 33, 61:: Coding section
- 34, 62:: Modulation section
- 36, 66:: IFFT section
- 37, 67:: GI insert section
- 38, 68:: D/A converter (D/A)
- 39, 69:: Receiver
- 40, 70:: Transmitter
- 58:: DeModulation section
- 64:: Pilot signal generation section

### Best Modes for Carrying Out the Invention

Next, embodiments according to the present invention will be described, referring to Figures. The same symbol is given to the component and the corresponding portions which have the same configuration or function in each Figure, and description thereof is omitted. Also in a flowchart, in the case of the same process being shown, the same step number is given, and description thereof is omitted.

In the following, in an E-UTRA system, a channel compensation method of a data symbol, a wireless communication system and a transmitter and receiver configuration using the method according to the present invention will be described as an example when downlink transmission by a single antenna without beamforming. However, the present invention is applicable to not only downlink transmission but also uplink transmission.

In addition, in the following description, a base station (base station apparatus) and a terminal (terminal apparatus) are described as an example, and they may be other apparatuss as far as the base station has a function to transmit a signal by multiplexing a pilot signal therein, and the terminal has a function to receive the signal multiplexed with the pilot signal. The base station apparatus is also called a communication controller because it controls communication. Further, the present invention can be applied to a communication apparatus which performs communication with a transmission unit multiplexed with the pilot signal. The communication apparatus corresponds to the one having a function of one or both of the base station and the terminal.

The transmission unit is formed of a plurality of symbols, and the plurality of symbols is divided into pilot symbols (PS: Pilot Symbol) where pilot signals are allocated, and data symbols (DS: Data Symbol) where data are allocated. Among pilot symbols, it is described that a symbol to which a first pilot signal (first pilot signal) is allocated is a first pilot symbol (FPS: First Pilot Symbol) and, a symbol to which a second pilot signal (second pilot signal) is allocated is a second pilot symbol (SPS: Second Pilot Symbol) .

In addition, hereinafter, a channel estimation value obtained from a pilot symbol means the same meaning as that obtained from the pilot signal allocated to the pilot symbol. A reception quality of a pilot symbol means the same as that of the pilot signal allocated in the pilot symbol. In this description, these are not distinguished strictly. The same is applied to a data symbol.

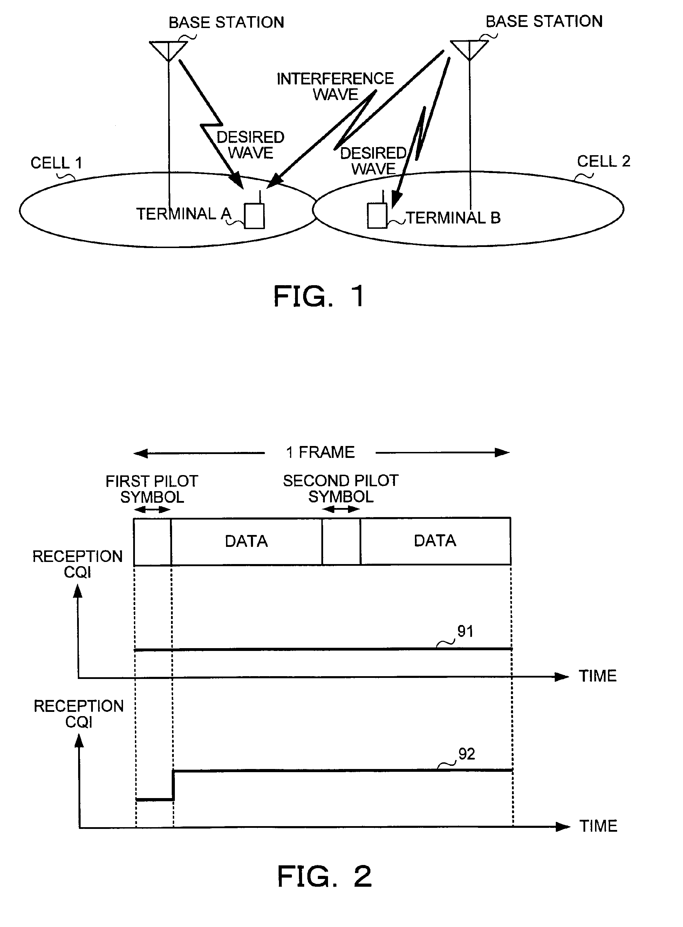

FIG. 1 shows a state of an interference wave coming from an adjacent cell in an E-UTRA system, and FIG. 2 shows an example of an effect which the interference wave gives on the reception quality. Here, for the sake of simplicity, an example of a cell configuration where the number of adjacent cells is one is shown. FIG. 2 shows a configuration example of one frame, and an example of a variation of reception CQI (Channel Quality Information) in a terminal A corresponding to the terminal allocation state in the adjacent cell (cell 2). In the E-UTRA system, in order to perform frequency scheduling and adaptive modulation corresponding to the reception quality in the terminal, the method that the reception CQI is measured in each terminal and the measurement result is reported to the base station is used, and the measurement result of this reception CQI is utilized in the present invention.

Reception CQI in an upper diagram of FIG. 2 shows the reception CQI in the terminal A when the resource which is quite the same as that allocated to the terminal A in cell 1 is used also in cell 2 (hereinafter referred to as "reception CQI 91"). For example, it is the case where the resource is allocated to a terminal B. Reception CQI in a lower diagram of FIG. 2 shows the reception CQI (hereinafter referred to as "reception CQI 92") in the terminal A when the resource which is the same as that allocated to the terminal A in the cell 1 is not used in the cell 2. As shown in the reception CQI 91, when the same resource as that allocated to the terminal A is allocated to the terminal B of the cell 2, since a signal addressed to the terminal B is observed as an interference in the terminal A, the reception CQI in the terminal A becomes always low level within the frame. On the other hand, when the same resource as that allocated to the terminal A is not used in the cell 2, as shown in the reception CQI92, the reception CQI becomes low level like the case of the reception CQI91 in the first pilot transmission period, but high reception CQI is obtained in the other transmission period. As described previously, this is because, in contrast to that the first pilot symbol is always affected by interference since the first pilot symbol is always transmitted almost at the same timing in all cells, the data symbol and the second pilot symbol are not affected by the interference in a certain case depending on the allocation state of the adjacent cell since the data symbol and the second pilot symbol are transmitted only when a user is allocated.

When the state is as shown in the reception CQI 92, in contrast to that many errors are included in a channel estimation value obtained from the first pilot symbol since the first pilot symbol is affected by the interference, the channel estimation value obtained from the second pilot symbol has few errors since the second pilot symbol is not affected by the interference. Therefore, in the case of performing channel compensation using the channel estimation value obtained from the second pilot symbol in such a condition, compared with the case of using the channel estimation value obtained from the first pilot symbol, channel compensation of the data symbol can be performed with high accuracy.

### (A first embodiment)

According to a first embodiment, a second pilot symbol is transmitted in a state without interference from an adjacent cell, and channel compensation of data symbol is performed using a channel estimation value obtained from a second pilot symbol.

Specifically, a reception CQI of a first pilot symbol is compared with the second pilot symbol received in each terminal, when the reception CQI of the second pilot symbol is higher than that of the first pilot symbol by a predetermined threshold value (difference threshold value) or more, it is judged that there is no interference from the adjacent cell, and the channel compensation of the data symbol is performed using the channel estimation value obtained from the second pilot symbol. On the other hand, when the difference between the reception CQI of the second pilot symbol and that of the first pilot symbol becomes less than the predetermined threshold value, it is judged that there is the interference from the adjacent cell, in this case, the channel compensation of the data symbol is performed using the channel estimation value obtained from the first pilot symbol. Here, although when an interference power is high, a state where an error of the reception CQI value becomes large to cause a misjudgment is considered, the influence of the error when the influence of the interference is large can be reduced by setting the threshold value at a high value to some extent.

When a variation rate of a fading (movement speed of a terminal) is high, in order to perform the channel compensation to follow the fading variation, the channel compensation of the data symbol is performed using the value obtained by conducting an interpolation and extrapolation processing for the channel estimation value obtained from the first pilot symbol and the second pilot symbol. Thus, by switching the channel estimation values used for the channel compensation, it becomes possible to perform the channel compensation corresponding to the existence of the interference coming from the adjacent cell (the terminal allocation state in the adjacent cell) and the variation rate of the fading, and a demodulation error can be reduced.

However, as stated previously, the second pilot symbol is not always transmitted in the E-UTRA system, and always transmitting second pilot symbol is not efficient because of causing lowering the throughput. Therefore, the present embodiment uses the method of performing the control which requests the base station side from the terminal side to transmit the second pilot symbol corresponding to the reception quality.

The each terminal, first, in a state where the second pilot symbol is not transmitted, measures and compares reception CQI of the first pilot symbol and that of the data symbol. At this time, when the reception CQI of the data symbol is higher by the predetermined threshold value or more than the reception CQI of the first pilot symbol, the terminal judges that there is no interference from the adjacent cell, and requests the base station to transmit the second pilot symbol. On the other hand, when the difference between the reception CQI of the data symbol and that of the first pilot symbol becomes less than the predetermined threshold value, the terminal judges that there is the interference from the adjacent cell, and does not request the base station to transmit the second pilot symbol, since the channel compensation using the channel estimation value obtained from the first pilot symbol is performed in this case. In the state where the second pilot symbol is being transmitted, when the difference between the reception CQI of the second pilot symbol transmitted and that of the first pilot symbol becomes less than the predetermined threshold value, the request to stop the transmission of the second pilot symbol is sent to the base station from the terminal. However, when the second pilot symbol is not transmitted, the data symbol is transmitted instead and a lot of data can be transmitted compared with the case where the second pilot symbol is transmitted.

Thus, by transmitting the second pilot symbol depending on the reception quality, transmission of an unnecessary pilot symbol can be avoided and lowering of the throughput can be prevented.

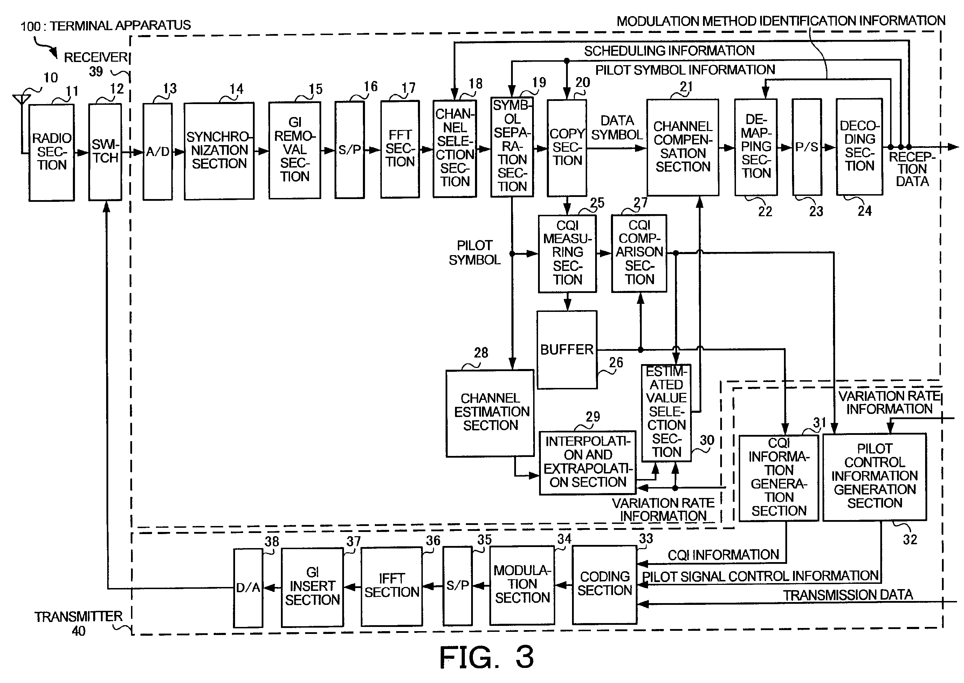

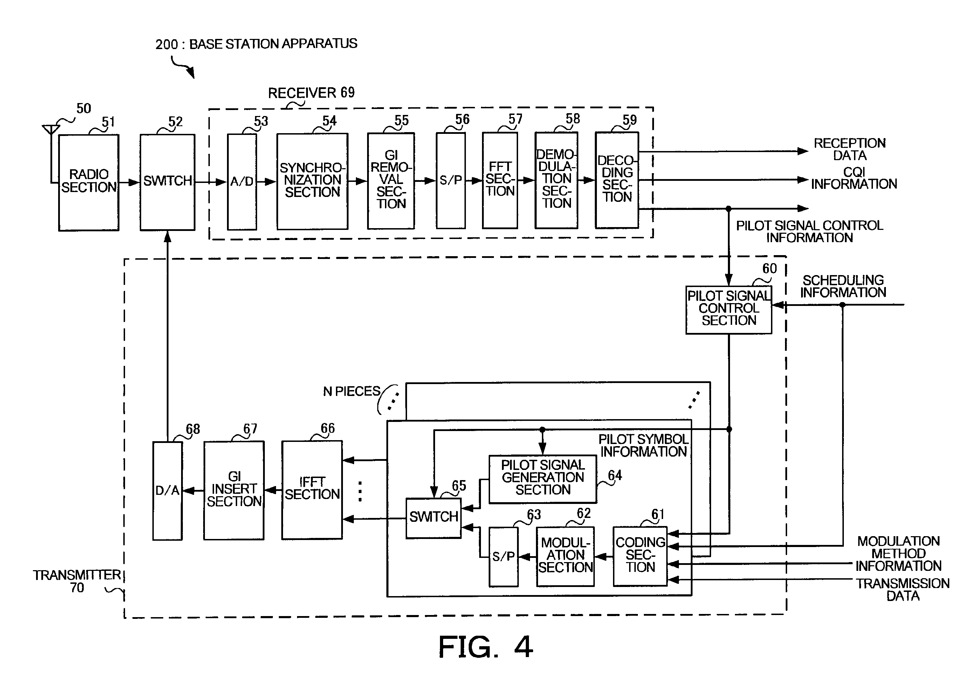

Here, the terminal apparatus configuration and base station apparatus configuration using the channel compensation method according to the embodiment will be shown. FIG. 3 shows a block diagram illustrating a configuration of a terminal apparatus 100 according to the first embodiment, and FIG. 4 shows a block diagram illustrating a configuration of a base station apparatus 200 according to the first embodiment.

As shown in FIG. 3, the terminal apparatus 100 according to the embodiment includes an antenna section 10, a radio section 11, a switch 12, a receiver 39, and a transmitter 40. The receiver 39 includes an A/D (Analog to Digital) converter (A/D) 13, a synchronization section 14, a GI (Guard Interval) removal section 15, an S/P (Serial to Parallel) converter (S/P) 16, an FFT (Fast Fourier Transform) Section 17, a channel selection section 18, a symbol separation section 19, a copy section 20, a channel compensation section 21, a De-mapping section 22, a P/S (Parallel to Serial) converter (P/S) 23, a Decoding section 24, a CQI (Channel Quality Indicator) measuring section (measuring section) 25, a buffer 26, a CQI comparison section (comparison section) 27, a channel estimation section 28, an interpolation and extrapolation section 29, and an estimated value selection section 30. A transmitter 40 includes a CQI information generation section 31, a pilot control information generation section 32, a coding section 33, a Modulation section 34, an S/P converter (S/P) 35, an IFFT (Inverse FFT) section 36, a GI insert section 37, and a D/A (Digital to Analog) converter (D/A) 38.

When receiving a frame, as shown in FIG. 9, transmitted from the base station, the terminal apparatus 100 shown in FIG. 3 converts the signal received by the antenna section 10 into the frequency band in which A/D conversion is possible in the radio section 11, and converts it into a digital signal in the A/D converter 13 via the switch 12. Next, after establishing a symbol synchronization in the synchronization section 14 and removing GI for each symbol in the GI removal section 15, the terminal apparatus 100 converts, in the FFT section 17, a signal in time domain into a signal in frequency domain via the S/P converter 16.

Since signals addressed to other terminals are also included in the received signal, the terminal apparatus 100 selects, in the channel selection section 18, only the frequency channel allocated to the self-terminal and extracts only the signal addressed to the self-terminal from the output signal of the FFT section 17. The demodulated result of the information (scheduling information) notified in advance from the base station is used as the allocation information at this time.

After only the signal addressed to the self-terminal is extracted in channel selection section 18, the pilot symbol and data symbol which are multiplexed are separated in the symbol separation section 19. As stated previously, the second pilot symbol has the case of being multiplexed or not multiplexed, but the information showing the existence or non-existence of the second pilot symbol will be notified in advance from the base station as pilot symbol information. When the second pilot symbol is multiplexed, in the symbol separation section 19, the first and second pilot symbols and the data symbols are separated, and the two pilot symbols are sent to the CQI measuring section 25 and the channel estimation section 28.

In the CQI measuring section 25, CQI of the first pilot symbol is measured first and the result is stored in the buffer 26. Similarly, CQI of the second pilot symbol is measured in the CQI measuring section 25, and the result and the CQI measurement result of the first pilot symbol stored in the buffer 26 are input into the CQI comparison section 27.

In the CQI comparison section 27, comparison of the CQI in the first pilot symbol and the CQI in the second pilot symbol is performed, and the comparison result of the calculated difference of the CQI in the first pilot symbol and the CQI in the second pilot symbol is sent to the estimated value selection section 30 and the pilot control information generation section 32. The CQI in the first pilot symbol stored in the buffer 26 will be sent to the CQI information generation section 31, and notified to the base station side as the CQI information.

In the channel estimation section 28, the channel estimation using the first pilot symbol and the second pilot symbol is performed, respectively, and two calculated channel estimation values are sent to the interpolation and extrapolation section 29. However, the channel estimation method according to the embodiment uses the method of complex dividing the received pilot signal in a frequency domain using the known pilot signal.

To the interpolation and extrapolation section 29, the calculated channel estimation values and the variation rate information showing the variation rate of the channel (movement speed of the terminal) are input, and when the variation rate is lower than a predetermined threshold value (speed threshold value), the two input channel estimation values are output as they are, to the estimated value selection section 30. On the contrary, when the variation rate is higher than the predetermined threshold value, in order to calculate the channel estimation value following the fading variation, the interpolation and extrapolation calculation (simple linear interpolation in the embodiment) are performed on the channel estimation value calculated from the first pilot symbol and the channel estimation value calculated from the second pilot symbol, and the result is output to the estimated value selection section 30. Here, in the embodiment, the variation rate information is made to be the information measured in advance in the terminal and is notified from the block of the upper layer not illustrated.

To the estimated value selection section 30, the channel estimation value and the variation rate information, and the CQI comparison result are input, but when the variation rate is lower than the predetermined threshold value, and the CQI of the second pilot symbol is higher than that of the first pilot symbol by the predetermined threshold value or more, the channel estimation value calculated from the second pilot symbol is output to the channel compensation section 21. On the contrary, when the variation rate is lower than the predetermined threshold value, and the difference between CQI of the second pilot symbol and that of the first pilot symbol is less than the predetermined threshold value, the channel estimation value calculated from the first pilot symbol is output to the channel compensation section 21. When the variation rate is higher than the predetermined threshold value, the result of the interpolation and extrapolation processing of the first pilot symbol and the second pilot symbol is output to the channel compensation section 21 (the input from the interpolation and extrapolation section 29 is output as it is).

Thus, in the channel compensation section 21 into which the channel estimation value selected corresponding to the quality and the variation rate of the pilot symbol is input, the channel compensation of the data symbol previously input is performed using the channel estimation value. The data signal after the channel compensation is sent to the De-mapping section 22, and is demodulated based on modulation method identification information. When a modulation level and an coding rate which are used in data transmission are altered corresponding to the variation of the channel, this modulation method identification information is information indicating the modulation method and the encoding rate which are used in the corresponding frame and is notified in advance from the base station. The data signal after demodulation is, via the P/S converter 23, error-corrected and decoded in the Decoding section 24 and the obtained reception data is sent to the upper layer not illustrated.

In the above, described is operation of the terminal side receiver 39 about the case where the second pilot symbol is multiplexed. Next, described is operation of the receiver 39 in the embodiment, especially the operation with respect to measurement of CQI about the case where the second pilot symbol is not multiplex. When the second pilot symbol is not multiplexed, it is impossible to perform the channel estimation by means of the second pilot symbol and to perform the interpolation and extrapolation processing of the channel estimation value of the first pilot symbol and the second pilot symbol. Therefore, the channel estimation in this case is performed only using the first pilot symbol, and the channel compensation is performed using the channel estimation value obtained from the first pilot symbol. Here, in the embodiment, it is needed to judge whether the interference from other cells has arrived during the transmission period of the data symbol also in this case, and, in the case of no interference, since it is necessary to request the base station to transmit the second pilot symbol, CQI of the data symbol is measured in the CQI measuring section 25. This measurement is made to be performed using only a part of data symbols (one symbol) input into the copy section 20 from the symbol separation section 19. At this time (when the second pilot symbol is not multiplexed), in the copy section 20, the processing which copies only a part of the data symbols in a frame and outputs the copy to the CQI measuring section 25 is performed. The CQI of the data symbol measured in this way is output to the CQI comparison section together with CQI of the first pilot symbol, and the comparison of the two CQIs is performed.

With such a configuration, also in the case where the second pilot symbol is not multiplexed, the existence of the terminal communicating using the same resource in the adjacent cell is judged, and it can be determined whether or not to multiplex the second pilot symbol.

Next, the transmitter 40 at the terminal side will be described. As stated previously, in the CQI information generation section 31 of FIG. 3, the CQI measurement result of the first pilot symbol is input, and the CQI information used in the base station is generated when the frequency scheduling and the adaptive modulation are performed. This CQI information is input into the coding section 33.

In the pilot control information generation section 32, the variation rate information notified from the upper layer, and either the comparison result of CQI of the first pilot symbol and the second pilot symbol or the comparison result of CQI of the first pilot symbol and the data symbol notified from the CQI comparison section 27 are input. Among these, when the variation rate is lower than the predetermined threshold value, and further, CQI of the second pilot symbol or the data symbol is higher than CQI of the first pilot symbol by the predetermined threshold value or more, the pilot control information generation section 32 generates information requesting the base station to transmit the second pilot symbol. On the contrary, when the variation rate is lower than the predetermined threshold value and CQI of the second pilot symbol or the data symbol is less than CQI of the first pilot symbol by the predetermined threshold value, the pilot control information generation section 32 generates information which suspends the transmission of the second pilot symbol or does not request the transmission of the second pilot symbol. When the variation rate is higher than the predetermined threshold value, the pilot control information generation section 32, without depending on the comparison result of CQI, generates information requesting the base station to transmit the second pilot symbol. The pilot signal control information (pilot symbol control information, control information) which notifies the requesting or suspending of the multiplexing of the second pilot symbol thus generated is input into the coding section 33.

As mentioned above, in the coding section 33 in which CQI information and pilot signal control information are input, transmission data are further input from the upper layer, and forward error correction and encoding are performed on those data, respectively. Then, the data is modulated in the Modulation section 34 and via the S/P converter 35, in the IFFT section 36, the signal of a frequency domain is converted into the signal of a time domain. After IFFT, GI is added in the GI insert section 37, and the digital signal is converted into the analog signal in the D/A converter 38. The signal after D/A conversion is, in the radio section 11 via the switch 12, frequency-converted to the frequency band for transmission, and is transmitted from the antenna section 10.

With such the configuration, when the variation rate is high or the terminal using the same resource does not exist in the adjacent cell, the transmission (allocation) of the second pilot symbol can be requested to the base station, and in the other case, the enhancement in the transmission efficiency can be achieved by suspending or not requesting the transmission (allocation) of the second pilot symbol.

Next, the configuration of the base station apparatus 200 in the embodiment will be described. As shown in FIG. 4, the base station apparatus 200 in the embodiment includes an antenna section 50, a radio section 51, a switch 52, a receiver 69 and a transmitter 70. Among these, the receiver 69 includes an A/D converter (A/D) 53, a synchronization section 54, a GI removal section 55, an S/P converter (S/P) 56, an FFT section 57, a demodulation section 58, and a Decoding section 59. The transmitter 70 includes a pilot signal control section (control section) 60, a coding section 61, a Modulation section 62, an S/P converter (S/P) 63, a pilot signal generation section 64, a switch 65, an IFFT section 66, a GI insert section 67, and a D/A converter (D/A) 68.

When receiving the signal transmitted from the terminal, the base station shown in FIG. 4 converts the signal received by the antenna section 50 into the frequency band in which A/D conversion is possible in the radio section 51, and converts it into a digital signal in the A/D converter 53 via the switch 52. Next, after establishing symbol synchronization in the synchronization section 54 and removing GI for each symbol in the GI removal section 55, the base station converts the signal of time domain into the signal of frequency domain in the FFT section 57 via the S/P converter 56. After this signal is demodulated in the deModulation section 58 (channel compensation and de-mapping), the signal is decoded in the Decoding section 59, and the transmitted data are reproduced. By the similar processing, the CQI information and pilot signal control information notified from the terminal are also acquired.
However, in the embodiment, since the OFDMA system is targeted, the deModulation sections and Decoding sections in the base station are provided in the number corresponding to the number of frequency channels (for example, N channels) (omitted in FIG. 4).

The data, CQI information, and pilot signal control information which are acquired from the terminal in the receiver 69 are output to the upper layer not illustrated. Among these, the CQI information is used as parameters at the time of performing frequency scheduling and adaptive modulation. The pilot signal control information is a transmission request of the second pilot symbol from the terminal or is a request for the transmission suspending, and this is also output to the upper layer and it is used for the determination etc. of a number of bit which is transmitted to the terminal from the base station. Further, the pilot signal control information is output also to the pilot signal control section 60, and the information (pilot symbol information notified to the terminal side) which indicates the existence or non-existence of the second pilot symbol here is generated. Then, the pilot symbol information is input into the coding section 61, the pilot signal generation section 64, and the switch 65.

In the coding section 61, besides the pilot symbol information, input are scheduling information showing the scheduling result, the modulation level information indicative of the modulation level and the coding rate used for data transmission, and transmission data, and forward error correction and encoding are performed therein, respectively. After modulated in Modulation section 62, the encoded information is time-multiplexed with the pilot signal by the switching action by means of the switch 65 via the S/P converter 63. This pilot signal is generated based on the pilot symbol information in the pilot signal generation section 64, and the switchover in the switch 65 is also performed based on the pilot symbol information. However, since the OFDMA system is targeted in the embodiment, the blocks which perform these operations are provided in the number corresponding to the number of frequency channels (for example, N channels).

The data signal for the total of N channels which is multiplexed with the pilot signal in the switch 65 is input into the IFFT section 66, and is collectively converted into the signal of the time domain. In the GI insert section 67, GI is inserted for every symbol, and the signal is converted into the analog signal in the D/A converter 68. Then, after frequency-converted into the transmission frequency in the radio section 51 via the switch 52, the signal is transmitted from the antenna section 50.

With such a configuration, the transmission (allocation) of the second pilot symbol can be suspended according to the request from the terminal, and the terminal can be notified of the existence or non-existence of the second pilot symbol. At the terminal, the channel compensation using the good channel estimation value can be performed corresponding to the receiving condition (existence or non-existence of the interference signal).

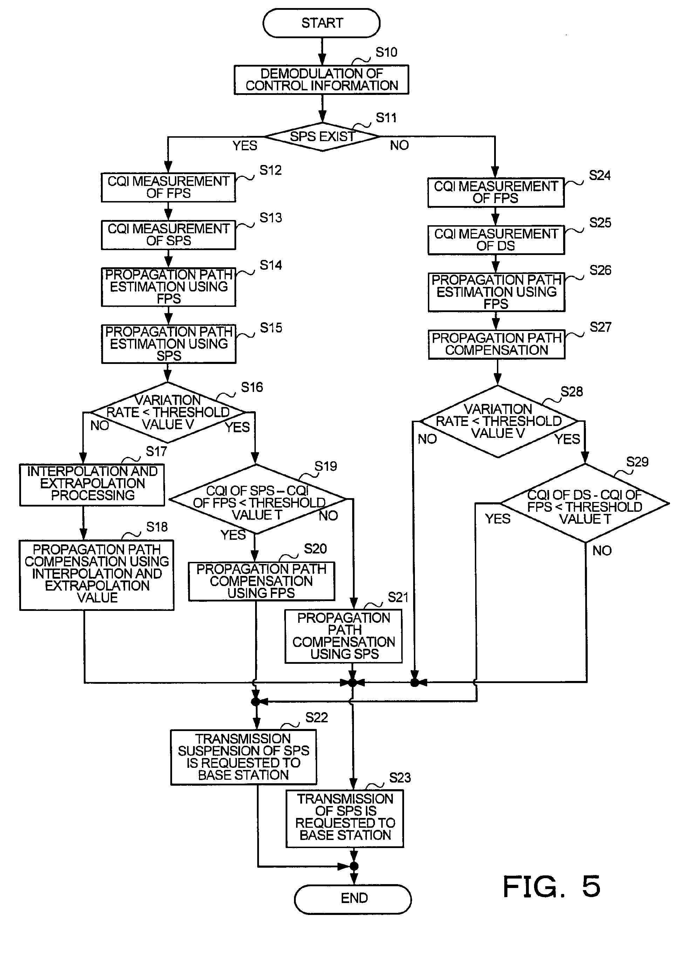

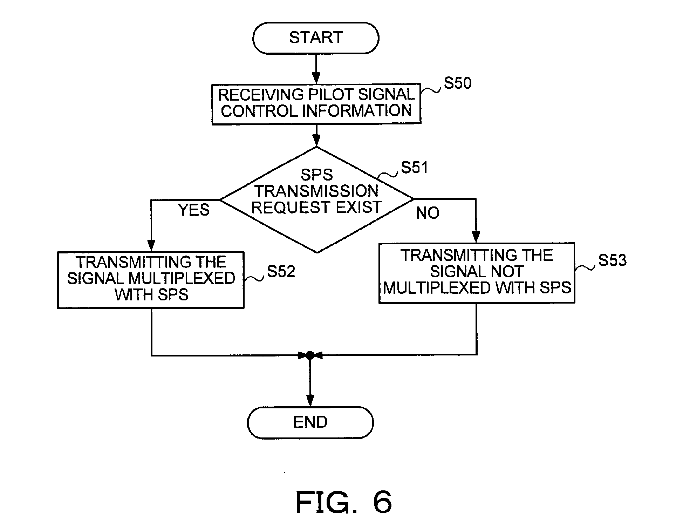

Next, flows of control of the terminal and the base station in the embodiment in connection with the control multiplexing the second pilot symbol are shown in FIG. 5 and FIG. 6, respectively. FIG. 5 is a flowchart showing an operation generating the pilot signal control information in the terminal side. As shown in FIG. 5, first, in the terminal side, the control signal transmitted prior to the data transmission is received (S10), and the pilot symbol information is acquired. This pilot symbol information indicates whether the second pilot symbol is multiplexed or not, and the symbol separation section 19 and the copy section 20 judge the existence or non-existence of the second pilot symbol from the pilot symbol information (S11). In step S11, when it is judged that the second pilot symbol is multiplexed (YES at S11), the CQI measuring section 25 measures CQI of the first pilot symbol (S12). Further, the measurement of CQI of the second pilot symbol is performed (S13), the channel estimation section 28 calculates the channel estimation value using the first pilot symbol and the second pilot symbol (S14, S15). Next, the channel compensation of the data symbol will be performed using either or both of the two channel estimation values thus calculated, and however comparing of the fading variation rate with predetermined threshold value V (speed threshold value) is performed first here (S16).

When the variation rate is the predetermined threshold value V or more as the result of the comparison in step S16 (NO at S16), in order to perform channel compensation following the fading varying at high rate, the interpolation and extrapolation section 29 performs interpolation and extrapolation processing on the channel estimation value calculated from the first pilot symbol and the channel estimation value calculated from the second pilot symbol, and calculates a new channel estimation value which interpolates the two channel estimation values (S17). Then, as shown in S18, the channel compensation section 21 performs channel compensation of the data symbol using the channel estimation value calculated by the interpolation and extrapolation process. Thus, the control information with respect to the next frame will be transmitted to the base station from the terminal after the channel compensation and demodulation are performed, and however in this case, since the variation rate of fading is fast, it is necessary to perform channel compensation using both the first pilot symbol and the second pilot symbol. Accordingly, the process progresses to S23 from S18, and the pilot control information generation section 32 generates the pilot signal control information requesting the base station to transmit the second pilot symbol, and sends the generated pilot signal control information to the base station via the radio section 11.

In addition, when the variation rate is less than the threshold value V as the result of the comparison in step S16 (YES at S16), since the fading variation rate is low, the channel compensation may be performed using either of the channel estimation value obtained from the first pilot symbol or the second pilot symbol. Then, the CQI comparison section 27 compares the CQI in the second pilot symbol with the CQI in the first pilot symbol (S19). As the result of the comparison in step S19, when the difference between the CQI of the second pilot symbol and the CQI of the first pilot symbol is less than predetermined threshold value T (difference threshold value) (YES at S19), the estimated value selection section 30 judges that the terminal using the same resource exists in the adjacent cell, and selects the channel estimation value obtained from the first pilot symbol, and the channel compensation section 21 performs channel compensation of the data symbol using the selected channel estimation value (S20). Then, the pilot control information generation section 32 generates the pilot signal control information requesting the base station to suspend transmission of the second pilot symbol which is not used for the channel compensation in this case, and sends the generated pilot signal control information to the base station (S22) On the other hand, as the result of the comparison in step S19, when the difference between CQI of the second pilot symbol and CQI of the first pilot symbol is beyond threshold value T determined in advance (NO at S19), estimated value selection section 30 judges that the terminal using the same resource does not exist in the adjacent cell, and selects the channel estimation value obtained from the second pilot symbol, and channel compensation section 21 performs channel compensation of the data symbol using the channel estimation value obtained from the second pilot symbol of which receiving condition is good (S21). Then, the pilot control information generation section 32 generates the pilot signal control information requesting the base station to continue the transmission of the second pilot symbol, and sends the generated pilot signal control information to the base station.

In step S11, when it is judged that the second pilot symbol is not multiplexed, the CQI measuring section 25 measures CQI of the first pilot symbol (S24), and also performs measurement of CQI of the data symbol (S25). Next, the channel estimation section 28 calculates the channel estimation value using the first pilot symbol (S26), and the channel compensation section 21 performs channel compensation of the data symbol using the calculated channel estimation value (S27). Next, the variation rate of fading is compared with the predetermined threshold value V (S28), and when the variation rate is the threshold value V or more (NO at S28), since it is necessary to perform channel compensation using two pilot symbols, the pilot control information generation section 32 generates the pilot signal control information requesting the base station to transmit the second pilot symbol and sends the generated pilot signal control information to the base station (S23) As the result of the comparison in step S28, when the variation rate is judged to be less than the threshold value V (YES at S28), the CQI comparison section 27 compares the CQI in the data symbol with the CQI in the first pilot symbol (S29). As the result, when the difference between the CQI of the data symbol and the CQI of the first pilot symbol is less than the predetermined threshold value T (YES at S29), the pilot control information generation section 32 generates the pilot signal control information requesting the base station to continue suspending of the transmission of the second pilot symbol and sends the generated pilot signal control information to the base station (S22). On the other hand, as the result of the comparison in step S29, when the difference between the CQI of the data symbol and the CQI of the first pilot symbol is the predetermined threshold value T or more (NO at S29), the pilot control information generation section 32 generates the pilot signal control information requesting the base station to transmit the second pilot symbol, and sends the generated pilot signal control information to the base station (S23).

FIG. 6 is a flowchart showing the operation multiplexing the second pilot signal in the base station side. The base station receives the pilot signal control information notified from the terminal (S50). The received pilot signal control information is the control information requesting the transmission or the transmission suspending of the second pilot symbol, and when there is the transmission request of the second pilot symbol from the terminal (YES at S51), the pilot signal control section 60 multiplexes the second pilot symbol in the resource to be allocated to this terminal in the next frame, and performs the signal transmission (S52). On the contrary, when there is the request for the transmission suspending of the second pilot symbol from the terminal (NO at S51), the pilot signal control section 60 does not multiplex the second pilot symbol in the resource to be allocated to this terminal in the next frame, and performs the signal transmission (S53).

Thus, by performing control of the terminal and the base station, it becomes possible to transmit (allocate) the second pilot symbol only when necessary, and at the terminal, the calculation of the channel estimation value corresponding to the reception condition (the advent status of interference and fading variation rate) and the channel compensation thereby can be performed.

In the embodiment shown above, when the difference between the CQI of the second pilot symbol and the CQI of the first pilot symbol is less than the predetermined threshold value, the channel compensation was performed using only the channel estimation value obtained from the first pilot symbol, but unlike this, the configuration may be the one in which the channel compensation is performed using the value averaging the channel estimation values of the first pilot symbol and the second pilot symbol. With such a configuration, the good channel estimation value may be obtained even in the state where the interference from the adjacent cell comes. In addition, in place of the value averaging the channel estimation values of the first pilot symbol and the second pilot symbol, the value may be the one (the value interpolated in a frequency direction, etc.) which is calculated using two of the channel estimation values.

Further, although the case may be considered that the channel estimation value is calculated by averaging several sub-carriers in the first pilot symbol in the direction of time and in the direction of frequency, but also in such a case, CQI of the second pilot symbol and CQI based on the value after calculating the average of a plurality of first pilot symbols are compared, and when the difference is the predetermined threshold value or more, by performing channel compensation using the channel estimation value obtained from the second pilot symbol, the demodulation can be performed in higher accuracy. That there exists the channel condition (few channel variations in the direction of time and in the direction of frequency) which can average the several sub-carriers in the first pilot symbol in the direction of time and in the direction of frequency means that it is possible to calculate channel estimation value by averaging similarly about the second pilot symbol. Then, CQI and channel estimation value are calculated by averaging several sub-carriers in the second pilot symbol in the direction of time and in the direction of frequency, and a configuration using them may be made to be configured.

Further, in the embodiment, although the terminal side has judged the transmission or the transmission suspending of the second pilot symbol, the base station side may perform the judgment. In this case, from the terminal, CQI of each pilot symbol or the data symbol will be notified to the base station. Thus, as a system suitable for determining the transmission or the transmission suspending of the pilot symbol at the initiative of the base station, a system which performs transmission diversity from the base station having a plurality of antennas (sectors) and a system which performs site diversity from two or more of the base stations, etc. may be possible. In such transmission diversity, although first pilot symbols having the signals different for each antenna are transmitted (since it is used for cell searching etc.), the CQI in the data symbol (or second pilot symbol) becomes high as compared with CQI in the first pilot symbol since the identical signal is transmitted from a plurality of antennas (base station) about the data symbol. Therefore, when such transmission is performed, the judgment from the terminal side is unnecessary and the control of the pilot symbol may be performed in the initiative of the base station. Further, in the terminal side, by performing channel compensation using the channel estimation value obtained from the multiplexed second pilot symbol, a good demodulation performance can be acquired as compared with the case where the channel compensation is performed using the channel estimation value obtained from the first pilot symbol.

For example, the base station apparatus shown in FIG. 4 may have a following configuration. For example, a base station apparatus receives the reception quality (channel estimation value) of the first pilot symbol and the second pilot symbol (or data symbol) via the radio section 51 from the terminal. The base station apparatus further comprises a comparison section for taking-in the reception quality of the received first pilot symbol and the reception quality of the symbol different from the symbol in which the first pilot symbol is allocated are input, and for calculating the difference by comparing the taken-in two reception qualities, and a pilot control information generation section for generating the pilot signal control information instructing to allocate the second pilot signal to the symbol different from the symbol allocated with the first pilot symbol based on the difference calculated by the comparison section. The pilot signal control section 60 controls multiplexing of the second pilot symbol in addition to the first pilot symbol based on the generated pilot signal control information.

### (A second embodiment)

According to a first embodiment of the present invention, when the transmission request for the second pilot symbol is sent from the terminal, the base station has been made always to multiplex the second pilot symbol in the transmission of the next frame. However, when adaptive frequency scheduling (channel assignment) is performed in the base station, the frequency channel allocated at the time of the transmission of the next frame is not always the same as the channel of the previous frame, and when the frequency channels allocated differ, even if the second pilot symbol is multiplexed to be transmitted, the second pilot symbol may not be used for channel compensation. Then, in a second embodiment according to the present invention, when the frequency channel is not allocated to the same frequency channel as the channel of the previous frame, the second pilot symbol is made not to be multiplexed.

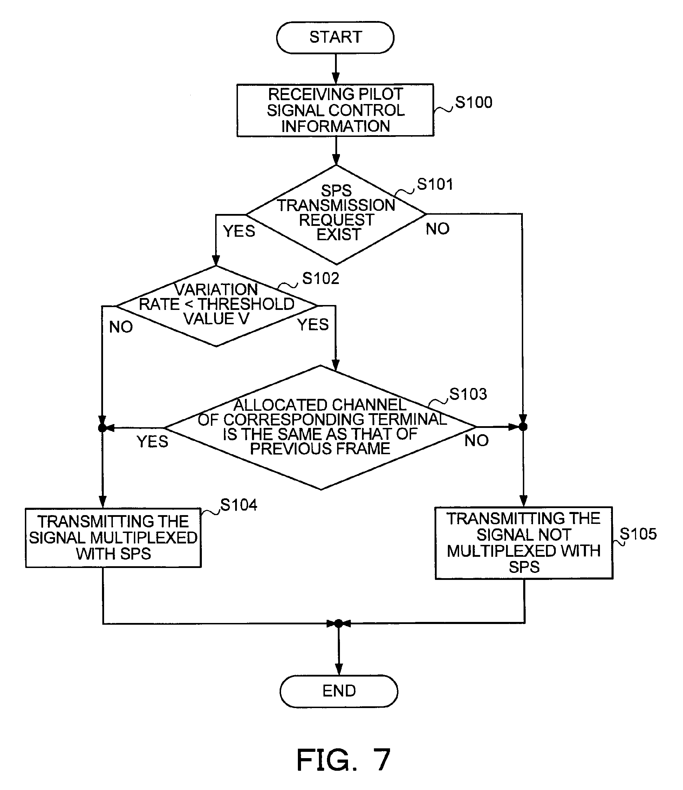

FIG. 7 is a flowchart showing the operation of the base station side according to the embodiment. However, since the control at the terminal side is realizable with the same flowchart as that of the first embodiment, the description thereof is omitted. As shown in FIG. 7, in the base station, the pilot signal control information notified from the terminal is received. (S100). This pilot signal control information is the control information requesting the transmission or the transmission suspending of the second pilot symbol. Next, the pilot signal control section 60 compares predetermined threshold value V with the variation rate of fading (S102), when there is the transmission request for the second pilot symbol from the terminal (YES at S101). As a result of the comparison in S102, when the variation rate of fading is judged to be the threshold value V or more (NO at S102), the pilot signal control section 60 multiplexes the second pilot symbol in the resource allocated to this terminal in the next frame to perform the signal transmission (S104). On the contrary, as a result of the comparison in step S102, when the variation rate of fading is judged to be less than the threshold value V (YES at S102), the pilot signal control section 60 judges whether the channel to be allocated to this terminal in the next frame is the same as the channel allocated at the time of the transmission of the previous frame (S103).

When it is judged that the same channel as the previous frame is allocated also in the next frame (YES at S103), the pilot signal control section 60 multiplexes the second pilot symbol in the resource allocated to this terminal in the next frame to perform the signal transmission (S104). On the contrary, when it is judged that the channel which is different from the time of previous frame transmission in the next frame is allocated (NO at S103), the pilot signal control section 60 performs the signal transmission without multiplexing the second pilot symbol in the resource allocated to this terminal in the next frame (S105).

In step S101, when there is no transmission request for the second pilot symbol, or there is the transmission suspending request (NO at S101), the pilot signal control section 60 performs the signal transmission without multiplexing the second pilot symbol in the resource allocated to this terminal in the next frame (S105).

With such a control, it becomes possible not to transmit the second pilot which is not used for channel compensation and may become useless, and becomes possible to transmit the data symbol instead, and decline in spectrum efficiency can be prevented.

### (A third embodiment)

In each above-mentioned embodiment, in the state where the terminal using the same resource does not exist in the adjacent cell, since channel estimation value obtained from the second pilot symbol has few errors due to the interference compared with channel estimation value obtained from the first pilot symbol, in all the terminals under such a condition, the channel compensation which requests the transmission of the second pilot symbol and utilizes the second pilot symbol has been made to be performed. However, it is the terminal located in the spot distant from the base station that is greatly affected by the interference coming from the adjacent cell, and in the terminal located around the base station, although the reception performance of the second pilot symbol is better than that of the first pilot symbol, it is considered that the reception performance of the first pilot symbol is also good enough.

This is because, in the terminal located around the base station, the desired signal (signal addressed to the self-terminal) is received in very large power and the interference signal coming from the adjacent cell is attenuated greatly. Therefore, also when the channel compensation by means of the first pilot symbol in the terminal located around the base station, it is considered that the performances of not being so much different from the case where the channel compensation by means of the second pilot symbol is performed are obtained. So, in the embodiment, the multiplexing of the pilot symbol is made to be performed with taking into consideration not only the existence or non-existence of the interference from the adjacent cell, but also further the location of the terminal.

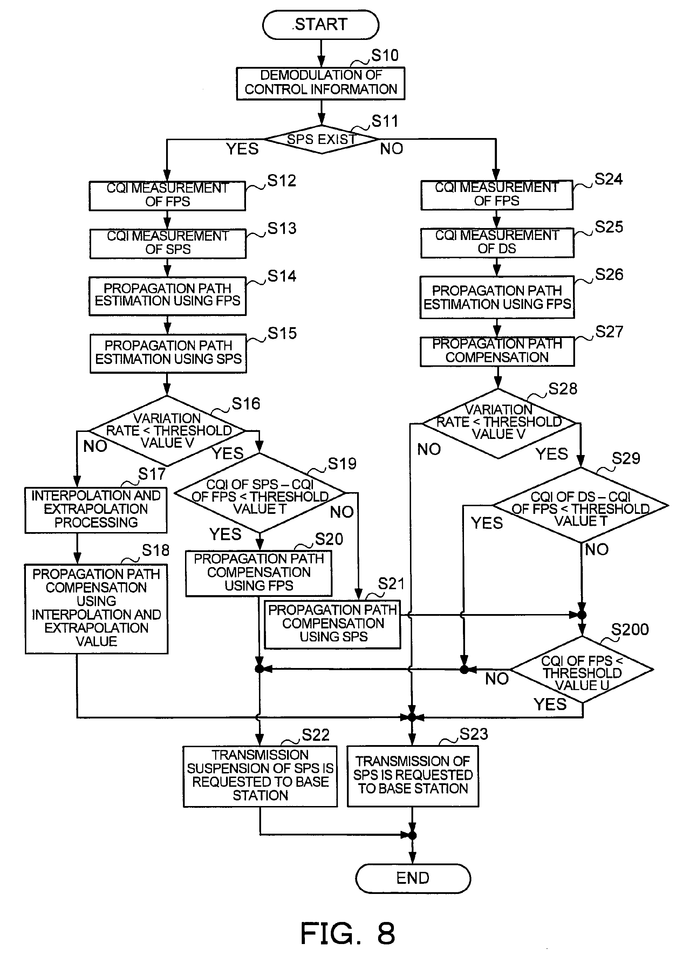

FIG. 8 is a flowchart showing the operation of the terminal according to the embodiment. In the embodiment, the configuration is configured so that the transmission or the transmission suspending of the second pilot symbol is judged by the terminal side like the first embodiment, but unlike this, it may be also good to configure so as to perform such judgment in the pilot signal control section 60 of the base station side. As shown in FIG. 8, the flows of control at the side of the terminal according to the embodiment is made to be the flowchart where the judgment of step S200 is added to the flowchart of FIG. 5 at the side of the terminal in the first embodiment. In this step S200, the CQI comparison section 27 compares CQI of the first pilot symbol with predetermined threshold value U (quality threshold value), and as the result of the comparison, when CQI of the first pilot symbol is the threshold value U or more, the request that the transmission suspending (or continuation of the transmission suspending) of the second pilot symbol is sent to the base station (S22), and when CQI of the first pilot symbol is less than the threshold value U, the process progresses to the process (S23) which requests the base station to transmit the second pilot symbol, respectively.

Thus, by adding the comparison processing (S200) of CQI of the first pilot symbol, the second pilot symbol is not transmitted for the terminal in which high CQI is obtained (near from a base station), but a lot of data can be transmitted instead. For the low CQI terminal (far from the base station), like a first embodiment, it becomes possible to perform channel estimation using the second pilot symbol.

### (A fourth embodiment)

According to the above-mentioned embodiment, when fading variation rate is high, the configuration has been made to be configured so that the channel compensation of the data symbol is performed using channel estimation value which performs the interpolation and extrapolation process of the channel estimation value obtained from each of the first pilot symbol and the second pilot symbol. However, since the error under the influence of the interference coming from the adjacent cell is included in the channel estimation value obtained from the first pilot symbol in many cases, it is possible that the error of the channel estimation value obtained by performing the interpolation and extrapolation processing of the channel estimation value obtained from two pilot symbols also becomes large. Then, in the embodiment, when the fading variation rate is high, and the terminal using the same resource is judged not to exist in the adjacent cell, the configuration is made to be configured so that transmission of a third pilot symbol together with the second pilot symbol is requested. Here, in the embodiment, this third pilot symbol is made to be multiplexed in the tail end of the frame. Then, when the terminal receives the frame where the second pilot symbol and the third pilot symbol are multiplexed, the interpolation and extrapolation processing is performed for the channel estimation value obtained from each of the second pilot symbol and the third pilot symbol, and the channel compensation of the data symbol is made to be performed using the channel estimation value obtained thereby. At this time, since many errors are included in the channel estimation value obtained from the first pilot symbol, the estimation value is made not to be used for the interpolation and extrapolation processing.

Thus, although the number of the transmittable data symbols decreases and the spectrum efficiency deteriorates a little by increasing the number of the pilot symbols, it can prevent that data errors occur frequently because the accuracy of the channel compensation improves under the influence of the fading variation and the interference coming from the adjacent cell.

As mentioned above, according to the preferred embodiment of the present invention, since, besides the first pilot signal (the first pilot signal) allocated to the first pilot symbol, the second pilot symbol (the second pilot signal) allocated to the different symbol from the first pilot symbol corresponding to the reception quality is multiplexed to be transmitted, by performing channel estimation using the second pilot symbol when the terminal using the same resource does not exist in the adjacent cell, it becomes possible to achieve enhancement in channel estimation accuracy while suppressing the decline in the transmission efficiency.

In each above-mentioned embodiment, although described using CQI as an example of the reception quality, it is not necessarily restricted to this, and as long as it is a parameter showing the level of the desired signal and the level of the interference signal which are received, an index other than CQI may be used.

Industrial Applicability

## Claims

1. A communication apparatus (100) receiving from a communication source apparatus a transmission unit including a plurality of symbols and being multiplexed with a first pilot signal,
said communication apparatus generating pilot signal control information requesting said communication source apparatus to allocate a second pilot signal to a symbol different from a symbol allocated with said first pilot signal, and notifying said communication source apparatus of said generated pilot signal control information, when a difference obtained by subtracting a reception quality of said first pilot signal from that of a symbol different from said symbol allocated with said first pilot signal is a difference threshold value or more.

2. The communication apparatus (100) according to claim 1, wherein when said difference is less than said difference threshold value, said communication apparatus generates pilot signal control information requesting to suspend allocation of said second pilot signal.

3. The communication apparatus (100) according to claim 1, wherein when said reception quality of said first pilot signal becomes a quality threshold value or more, said communication apparatus generates pilot signal control information requesting to suspend allocation of said second pilot signal.

4. A communication apparatus (100) receiving from a communication source apparatus a transmission unit including a plurality of symbols and being multiplexed with a first pilot signal, said communication apparatus comprising:
a measuring section (25) for measuring a reception quality of said first pilot signal and a reception quality of a symbol different from a symbol allocated with said first pilot signal;
a comparison section (27) for comparing the two reception qualities measured by said measuring section to calculate a difference; and
a pilot control information generation section (32) for generating pilot signal control information requesting said communication source apparatus to allocate a second pilot signal to the symbol different from the symbol allocated with said first pilot signal when said difference calculated by said comparison section is a difference threshold value or more.

5. The communication apparatus (100) according to claim 4, further comprising:
an estimated value selection section (30) for selecting a channel estimation value obtained from said second pilot signal when said second pilot signal is multiplexed in said transmission unit and said difference is said difference threshold value or more; and
a channel compensation section (21) for performing channel compensation using said selected channel estimation value.

6. The communication apparatus (100) according to claim 5, wherein when said difference calculated by said comparison section (27) is less than the difference threshold value, said estimated value selection section (30) selects a channel estimation value calculated using a channel estimation value obtained from said first pilot signal or a channel estimation value obtained from said first pilot signal and said second pilot signal.

7. The communication apparatus (100) according to claim 5, wherein when a movement speed is a speed threshold value or more, said pilot control information generation section (32) generates said pilot signal control information requesting to allocate said second pilot signal.

8. The communication apparatus (100) according to claim 7, further comprising:
an interpolation and extrapolation section (29) for interpolating between a channel estimation value obtained from said first pilot signal and said channel estimation value obtained from said second pilot signal when said movement speed is said speed threshold value or more, wherein
said channel compensation section (21) performs channel compensation using the channel estimation value interpolated by said interpolation and extrapolation section (29).

9. A communication apparatus (100) transmitting to a communication destination apparatus a transmission unit including a plurality of symbols and being multiplexed with a first pilot signal, said communication apparatus comprising:
a comparison section (27) for taking in a reception quality of said first pilot signal received from said communication destination apparatus and a reception quality of a symbol different from a symbol allocated with said first pilot signal, and comparing the two taken-in reception qualities to calculate a difference;
a pilot control information generation section (32) for generating pilot signal control information instructing to allocate a second pilot signal to a symbol different from the symbol allocated with said first pilot signal based on said difference calculated by said comparison section; and
a control section (40) for controlling multiplexing said second pilot signal in addition to said first pilot signal based on the generated pilot signal control information.

10. A communication apparatus (200) transmitting to a communication destination apparatus a transmission unit including a plurality of symbols and being multiplexed with a first pilot signal, said communication apparatus comprising:
a radio section (51) for receiving pilot signal control information requesting to allocate a second pilot signal to a symbol different from a symbol allocated with said pilot signal from said communication destination apparatus when a difference obtained by subtracting a reception quality of said first pilot signal from that of a symbol different from the pilot symbol allocated with said first pilot signal is a difference threshold value or more; and
a control section (60) for controlling multiplexing said second pilot signal in addition to said first pilot signal based on the received pilot signal control information.

11. The communication apparatus (200) according to claim 9 or 10, wherein when a resource transmitting data addressed to said communication destination apparatus differs from a resource at preceding data transmission, said control section (60) does not multiplex said second pilot signal.

12. The communication apparatus (200) according to any of claims 1, 9, or 10, wherein said first pilot signal is a common pilot signal simultaneously transmitted in a plurality of cells, and said second pilot signal is allocated to a symbol different in terms of time from said first pilot signal.

13. A communication apparatus (100) receiving from a communication source apparatus a transmission unit including a plurality of symbols and being multiplexed with a first pilot signal and a second pilot signal allocated to a symbol different from a symbol of said first pilot signal, said communication apparatus comprising:
a measuring section (25) for measuring reception qualities of said first pilot signal and said second pilot signal;
a comparison section (27) for calculating a difference obtained by subtracting said reception quality of said first pilot signal from said reception quality of said second pilot signal;
an estimated value selection section (30) for selecting a channel estimation value obtained from said second pilot signal when said difference is a difference threshold value or more; and
a channel compensation section (21) for performing channel compensation using the selected channel estimation value.

14. The communication apparatus (100) according to claim 13, wherein when said difference calculated by said comparison section (27) is less than said difference threshold value, said estimated value selection section (30) selects the channel estimation value calculated using a channel estimation value obtained from said first pilot signal or a channel estimation value obtained from said first pilot signal and said second pilot signal.

15. A wireless communication system communicating between a communication controller and a terminal apparatus using a transmission unit including a plurality of symbols and being multiplexed with a first pilot signal,
said wireless communication system multiplexing a second pilot signal in a symbol different from a symbol allocated with said first pilot signal when a difference obtained by subtracting a reception quality of said first pilot signal from that of the symbol different from the symbol allocated with said first pilot signal is a difference threshold value or more.
